# EUROPEAN PATENT APPLICATION

(11) **EP 1 914 931 A2**
(43) Date of publication of application: **23.04.2008**
(21) Application number: 07019862.7
(22) Date of filing: 10.10.2007
(51) Int. Cl.: H04L 12/18, H04L 12/46, H04L 29/08

(54) **IP multicast service system, switching device, and group selection transmission method used therefor**

(30) Priority: 18.10.2006 JP 2006283213
(71) Applicant: NEC Corporation, Minato-ku Tokyo (JP)
(72) Inventor: Oogushi, Sadaichirou, Minato-ku Tokyo (JP); Satou, Sou, Minato-ku Tokyo (JP)
(74) Representative: Glawe, Delfs, Moll

(57) **Abstract**

The object of the present invention is to provide an IP multicast service system which can design an independent multicast group system in each network on the center side and the subscriber-side. In an IP multicast service system according to the present invention including: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image, a group design on the basis of an independent group address system on the center-side network and on the subscriber-side network can be made by converting a group address of the multicast packet transmitted and received between the center-side network and the subscriber-side network.

## Description

This application is based upon and claims the benefit of priority from Japanese patent application No. 2006-283213 filed on October 18, 2006, the disclosure of which is incorporated herein in its entirety by reference.

### BACKGROUND OF THE INVENTION

### Field of the Invention

The present invention pertains to an IP multicast service system, a switching device, and a group selection transmission method used therefor, and particularly, the present invention pertains to a system for providing an IP (Internet Protocol) multicast service.

### Description of Related Art

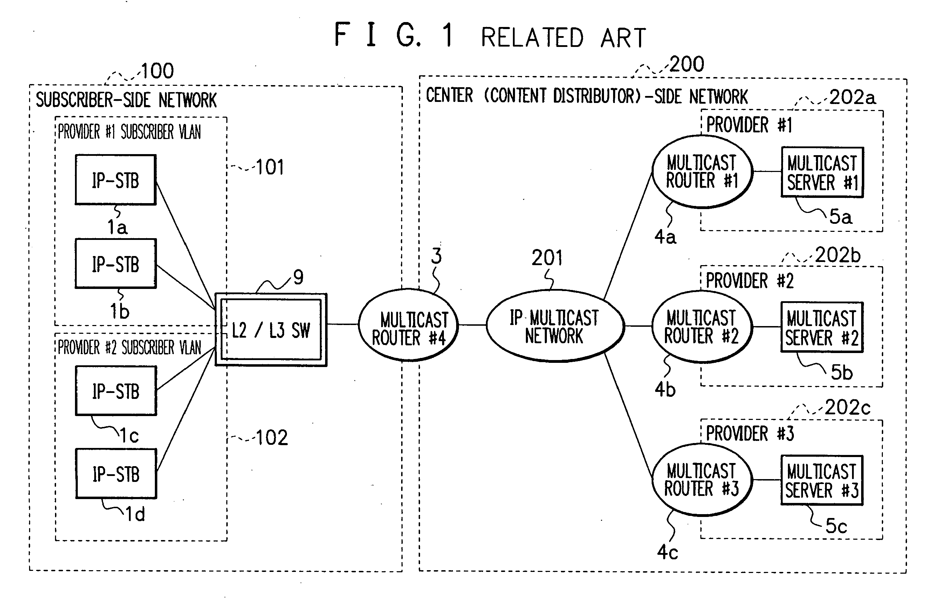

A typical network structure in an IP multicast service is shown in Fig. 1. A conventional network can be roughly divided into a center-side network 200 and a subscriber-side network 100.

The center-side network 200 is constructed by providers 202a to 202c for providing a multicast service, multicast servers (#1 to #3) 5a to 5c that accumulate a service such as an image in the providers (#1 to #3) 202a to 202c and can transmit it the public, multicast routers (#1 to #3) 4a to 4c for routing an IP multicast packet, and the like. Each of the multicast routers (#1 to #3) 4a to 4c is connected to an IP multicast network 201.

The subscriber-side network 100 is constructed by a multicast router (#4) 3 connected to the IP multicast network 201, an L2 (Layer 2)/L3 (Layer 3) switch (SW) 9 for consolidating the subscribers, IP-STBs (IP-Set Top Boxes) 1a to 1d for receiving an IP multicast packet transmitted from the multicast servers (#1 to #3) 5a to 5c and reproducing it as an image, and the like.

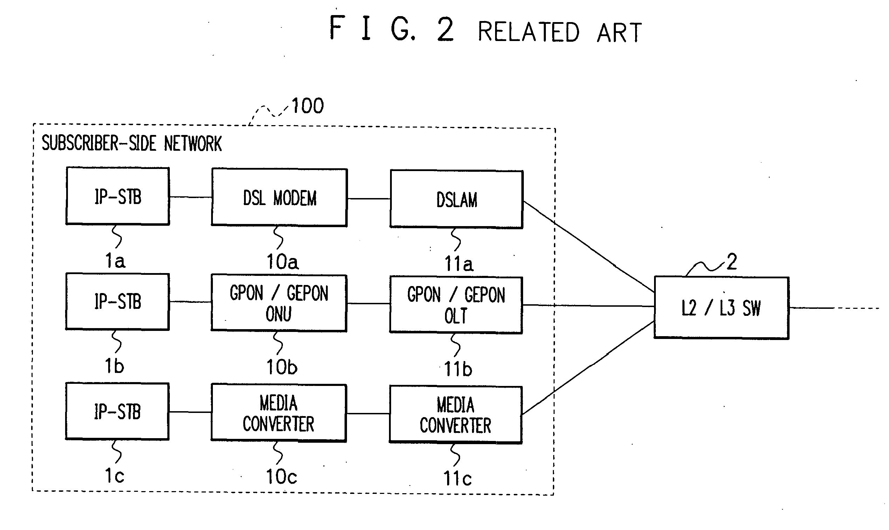

The subscriber-side network 100 means a general access network and a typical example thereof is shown in Fig. 2. According to a general access network, as shown in Fig. 2, a DSL modem (Digital Subscriber Line Modem) 10a for terminating a subscriber, a GPON (Gigabit Optical Network)/GEPON [Gigabit Ethernet (registered trademark) Optical Network] ONU (Optical Network Unit) 10b, and a Media Converter 10c are connected to the IP-STBs 1a to 1c, respectively, and they are consolidated by a DLSAM (Digital Subscriber Line Access Multiplexer) 11a, a GPON/GEPON OLT (Optical Line Terminal) 11b a Media Converter 11c, and the like; all of which are arranged in stations.

As an IP multicast control system, there is a system using a protocol that is used for controlling start and stop of multicast viewing between a host for viewing a multicast and the nearest router (for example, refer to non-patent documents: "Host Extensions for IP Multicasting" (RFC1112, August 1989), "Internet Group Management Protocol, Version 2" (RFC2236, November 1997), "Internet Group Management Protocol, Version 3" (RFC3376, October 2002), "Multicast Listener Discovery (MLD) for IPv6" (RFC2710, October 1999), and "Multicast Listener Discovery Version 2 (MLDv2) for IPv6" (RFC3810, June 2004). In addition, as a conventional method, in order to assist control by these protocols, there is an art that is assumed to be applied to the L2/L3 switch on the subscriber-side (for example, refer to non-patent documents: "Consideration for Internet Group Management Protocol (IGMP) and Multicast Listener Discovery (MLD) Snooping Switches" (RFC4541, May 2006), and "IGMP/MLD-based Multicast Forwarding ("IGMP/MLD Proxying")" (draft-ietf magma-igmp-proxy-06.txt, October 2004).

In the L2/L3 switch on the subscriber-side, the art described in the non-patent documents has problems, namely, (1) if a multicast group address of a provider is changed, an address to be received should be changed in units of IP-STBs, so that a procedure for changing setting for this is required and an operational cost is increased, and (2) there is no redundancy of a multicast route or a server and a service is not available in the case of a failure.

In these problems, as an art for solving the problem (2), there is a system of setting an source router that is used as an active system or a spare system in advance, providing a service by a router of the active system in a normal case, and switching it to the spare system in the case of a failure (for example, refer to patent documents: Japanese Patent Application Laid-Open No. 2005-072756, and Japanese Patent Application-Laid-Open No. 2006-101471).

However, according to the above-described IP multicast control system, in the case of the art described in the above-described patent documents, a protocol sequence for multicast viewing upon switching due to a failure is running, so that this involves a problem such that it takes a long switching time. In addition, since one side is always waiting as a spare system according to the IP multicast control system described in the non-patent documents, there is a problem such that an efficiency of using a server or a network is poor. Therefore, there has been desired an art that can design an independent multicast group system in each network on the center side and the subscriber-side.

Further, the above-described patent documents and non-patent documents do not describe an art that can design an independent multicast group system in each network on the center side and the subscriber-side.

### SUMMARY OF THE INVENTION

An exemplary objection of the invention is to provide an IP multicast service system, a switching device, and a group selection transmission method used therefor, which can design an independent multicast group system in each network on the center side and the subscriber-side that is the above-described problem.

In order to achieve the above-described object, the present invention has the following characteristics.

### <IP multicast service system>

An IP multicast service system according to an exemplary aspect of the present invention includes: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

### <Switching Device>

A switching device, according to an exemplary aspect of the present invention, provided on a subscriber-side network in an IP multicast service system, includes: a center-side network configured by a plurality of multicast servers; and the subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

### <Group Selection Transmission Method >

A group selection transmission method, according to an exemplary aspect of the present invention, used for an IP multicast service system, includes: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

### BRIEF DESCRIPTION OF THE DRAWINGS

Features of disclosed exemplary embodiments will be described by way of the following detailed description with reference to the accompanying drawings in which:
Fig. 1 is a block diagram showing a typical network structure in an IP multicast service;
Fig. 2 is a block diagram showing a constitutional example of a subscriber-side network shown in Fig. 1;
Fig. 3 is a block diagram showing a constitution of an IP multicast service system according to a first exemplary embodiment of the present invention;
Fig. 4 is a block diagram showing a constitutional example of a subscriber-side network shown in Fig. 3;
Fig. 5 is a view explaining the operation of the IP multicast service system;
Fig. 6 is a view showing an operational example of the IP multicast service system;
Fig. 7 is a schematic diagram of the transfer operation of an IGMP packet that is used for multicast control;
Fig. 8 is a view showing an operational example in an upward direction of IGMP packet transfer;
Fig. 9 is a view showing an operational example in a downward direction of IGMP packet transfer;
Fig. 10 is a block diagram showing a constitution of an IP multicast service system according to a second exemplary embodiment of the present invention;
Fig. 11 is a view showing an operational example in an upward direction;
Fig. 12 is a view showing an example of a method for detecting unavailability of a service of a server;
Fig. 13 is a view showing another example of the method for detecting unavailability of the service of the server;
Fig. 14 is a block diagram showing a constitution of an IP multicast service system according to a third exemplary embodiment of the present invention;
Fig. 15 is a block diagram showing a constitution of an IP multicast service system according to a fourth exemplary embodiment of the present invention;
Fig. 16 is a view showing an operational example in an upward direction of the IP multicast service system;
Fig. 17 is a view showing the operational example in the case of a failure of the IP multicast service system; and
Fig. 18 is a block diagram showing a constitution of an IP multicast service system according to a fifth exemplary embodiment of the present invention.

### DESCRIPTION OF EXEMPLARY EMBODIMENTS

Hereinafter, embodiments of the present invention will be described below with reference to the drawings.

### <First Exemplary Embodiment>

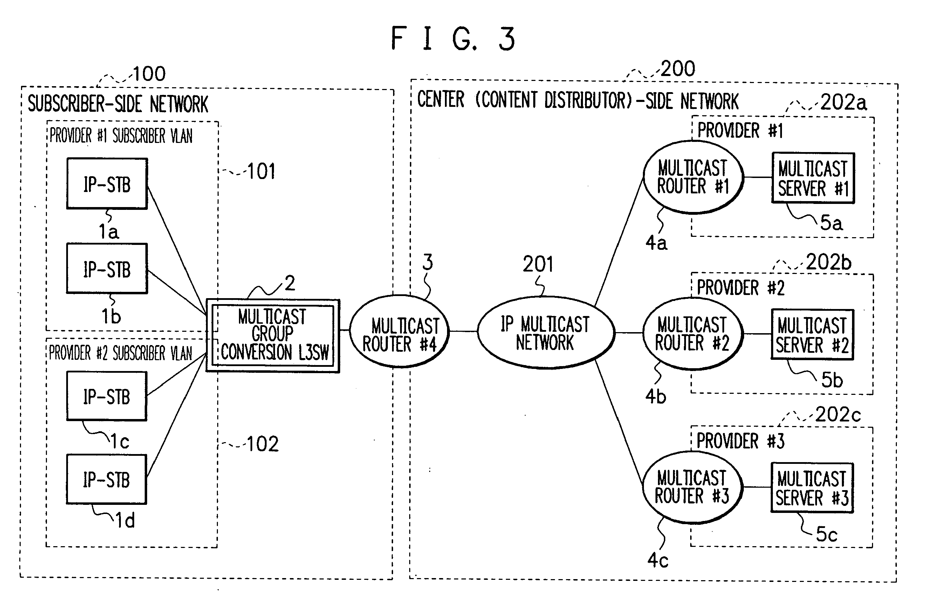

Fig. 3 is a block diagram showing a constitution of an IP multicast service system according to a first exemplary embodiment of the present invention. In Fig. 3, the IP multicast service system is configured by a center-side network 200 and a subscriber-side network 100.

The center-side network 200 is a network configuring a provider applying a service and is constructed by providers (#1 to #3) 202a to 202c for providing a multicast service, multicast servers (#1 to #3) 5a to 5c that accumulate a service such as an image in the providers (#1 to #3) 202a to 202c and can transmit it to the public, multicast routers (#1 to #3) 4a to 4c for routing an IP multicast packet, and the like. Each of the multicast routers (#1 to #3) 4a to 4c is connected to an IP multicast network 201.

The providers (#1 to #3) 202a to 202c are providers who intend to provide a service by means of multicast, wherein the multicast routers (#1 to #3) 4a to 4c and the multicast servers (#1 to #3) 5a to 5c are arranged.

The subscriber-side network 100 is a network configuring a user subscribing the service and is constructed by a multicast router (#4) 3 connected to the IP multicast network 201, a multicast group conversion L3 (Layer 3) switch (SW) 2 for consolidating the subscribers, IP-STBs (IP - Set Top Boxes) 1a to 1d for receiving an IP multicast packet transmitted from the multicast servers (#1 to #3) 5a to 5c and reproducing the IP multicast packet as an image, and the like. The IP-STBs 1a and 1b are arranged in a provider #1 subscriber VLAN (Virtual Local Area Network) 101, and the IP-STBs 1c and 1d are arranged in a provider #2 subscriber VLAN 102.

The IP-STBs 1a to 1d are apparatuses or software for receiving an IP packet and imaging it, and the multicast group conversion L3SW2 is an Ethernet (registered trademark) switch or an IP packet router to which the method of the present invention is applied.

The multicast router (#4) 3 and the multicast routers (#1 to #3) 4a to 4c are routers that can transfer a multicast packet, the IP multicast network 201 is a network that can transfer the multicast packet, and the multicast servers (#1 to #3) 5a to 5c are apparatuses or software for converting contents such as an image into a multicast packet to transmit.

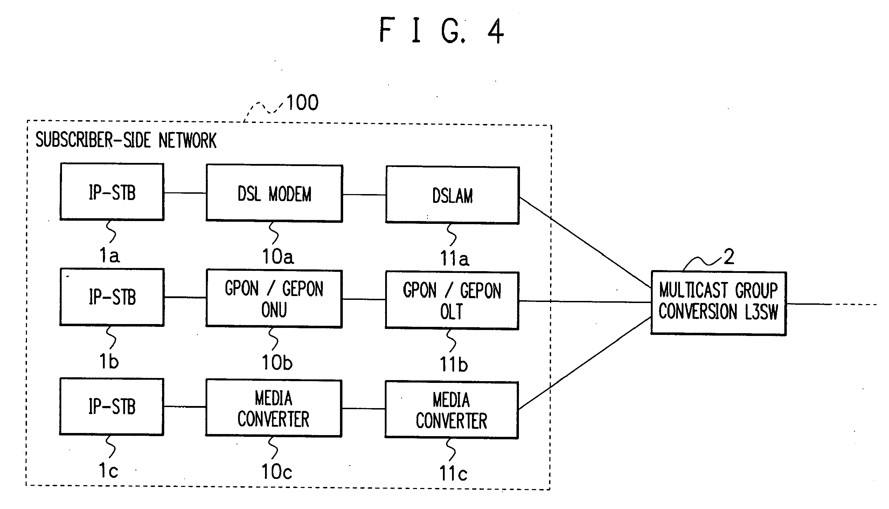

Fig. 4 is a block diagram showing a constitutional example of the subscriber-side network 100 in Fig. 3. Fig. 4 shows a typical example of a general access network. In a general access network of Fig. 4, a DSL modem (Digital Subscriber Line Modem) 10a for terminating a subscriber, a GPON (Gigabit Optical Network)/GEPON [Gigabit Ethernet (registered trademark) Optical Network] ONU (Optical Network Unit) 10b, and a Media Converter 10c are connected to the IP-STBs 1a to 1c, respectively, and they are consolidated by a DLSAM (Digital Subscriber Line Access Multiplexer) 11a, a GPON/GEPON OLT (Optical Line Terminal) 11b, a Media Converter 11c, and the like, all of which are arranged in stations (not shown).

The DSL modem 10a is a subscriber-side termination apparatus to be used for a metal line service, the GPON /GEPON ONU 10b is a subscriber-side termination apparatus to be used for an optical line service, and the Media Converter 10c is a subscriber-side termination apparatus to be used for an optical line service.

The DLSAM 11a is a station-side termination apparatus to be used for a metal line service, the GPON/GEPON OLT 11b is a station-side termination apparatus to be used for an optical line service, and the Media Converter 11c is a station-side termination apparatus to be used for an optical line service.

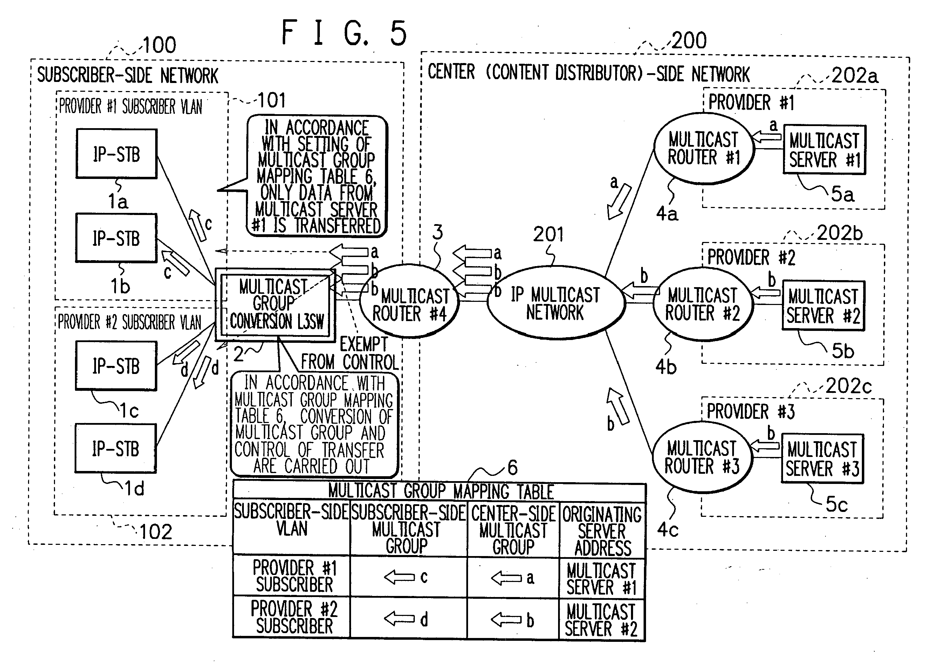

Fig. 5 is a view explaining the operation of the IP multicast service system according to the first embodiment of the present invention. With reference to Fig. 5, the operation of the IP multicast service system according to the first exemplary embodiment of the present invention will be described. In Fig. 5, a reference numeral 6 denotes a multicast group mapping table.

The multicast group conversion L3SW2 holds the multicast group mapping table 6 and converts a group address of the multicast packet according to the contents held by the multicast group mapping table 6. The multicast group mapping table 6 is configured by a correspondence between the subscriber-side VLAN (the provider #1 subscriber VLAN 101 and the provider #2 VLAN 102) and its multicast group and a correspondence between the source server address and its multicast group.

In this multicast group mapping table 6, the source server address corresponds to the multicast servers (#1 to #3) 5a to 5c located in the center-side network 200, and the multicast group corresponds to the multicast group transmitted by the multicast servers (#1 to #3) 5a to 5c. In addition, the subscriber-side VLAN corresponds to a VLAN that consolidates the IP-STBs 1a to 1d located in the subscriber-side network 100, and the multicast group corresponds to the multicast group that can be received among them.

Thus, according to the present embodiment, since address conversion is performed for the multicast group to be transmitted by the multicast servers (#1 to #3) 5a to 5c in the center-side network 200 and the multicast group to be received by the subscriber-side VLAN, the center-side network 200 and the subscriber-side network 100 can be independently designed as multicast group systems.

The multicast group conversion L3SW2 is provided with at least two or more ports so as to perform switching of an Ethernet (registered trademark) frame or routing an IP packet. In this case, defining a port for the center-side network 200 as an Upstream and a port for the subscriber-side network 100 as a Downstream, an IGMP (Internet Group Management Protocol)/MLD (Multicast Listener Discovery) Snooping or an IGMP/MLD Proxy may be operated.

The respective entries of the multicast group mapping table 6 are configured by the subscriber-side VLAN, the subscriber-side multicast group, the center-side multicast group, and the source server address. Defining a combination of the subscriber-side VLAN and the subscriber-side multicast group as one unit, this unit is related to the combination of the center-side multicast group and the originating source.

The related subscriber-side multicast group and the correlated center-side multicast group correspond to each other in terms of the group address on an one-to-one basis. If sizes of address spaces are the same, the group addresses may be designated by network units, for example, "224.1.1/24" on the subscriber-side for "234.1.1/24" on the center side.

The constitution of the present embodiment has been described above. A switching function of an Ethernet (registered trademark) frame in the multicast group conversion L3SW2, a routing function of the IP packet, an IGMP/MLD Snooping function, and an IGMP/MLD Proxy function have been well known to a person skilled in the art and these functions are not directly related to the present invention, so that the description about the detailed constitutions thereof is herein omitted.

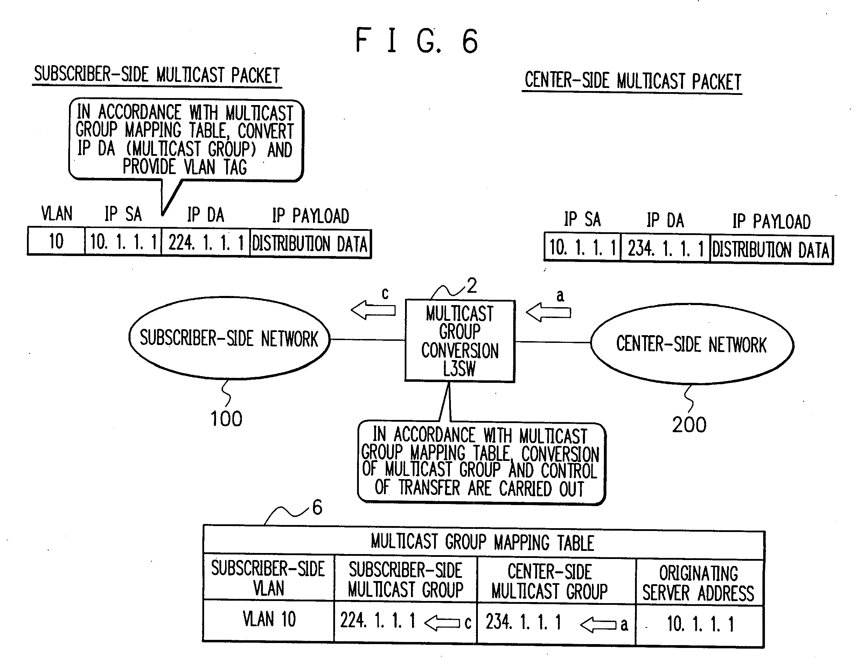

Fig. 6 is a view showing an example of the operation of the IP multicast service system according to the first exemplary embodiment of the present invention. With reference to Fig. 5 and Fig. 6, the transfer operation of the multicast packet according to the first exemplary embodiment of the present invention will be described below.

Upon receipt of the multicast packet from the center-side network 200, the multicast group conversion L3SW2 rewrites an IP DA (Destination Address) of the multicast packet in accordance with the contents held by the multicast group mapping table 6 and transmits it to the subscriber-side network 100 while giving a subscriber-side VLAN tag thereto. In Fig. 5 and Fig. 6, an example of an IPv4 (Internet Protocol version 4) is shown, however, the operation of an IPv6 (Internet Protocol version 6) is the same.

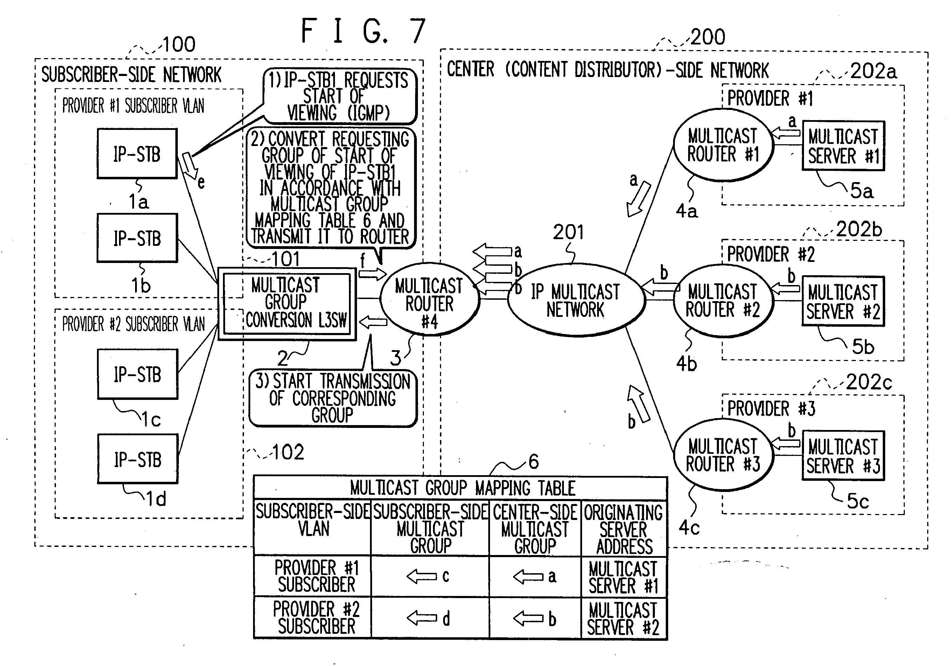

Fig. 7 is a schematic diagram of the transfer operation of an IGMP packet that is used for multicast control according to the first exemplary embodiment of the present invention. In Fig. 7, the IP-STB 1a requests start of viewing with the IGMP packet and the multicast group conversion L3SW2 rewrites the IGMP packet received from the subscriber-side network 100 so as to transmit it to the center-side network 200.

The multicast router (#4) 3 connected to the center-side network 200 starts a normal IGMP process and then, transmission of the multicast packet is started. The multicast packet that does not correspond to the multicast group mapping table 6 is exempted from control so as to be discarded or be transferred.

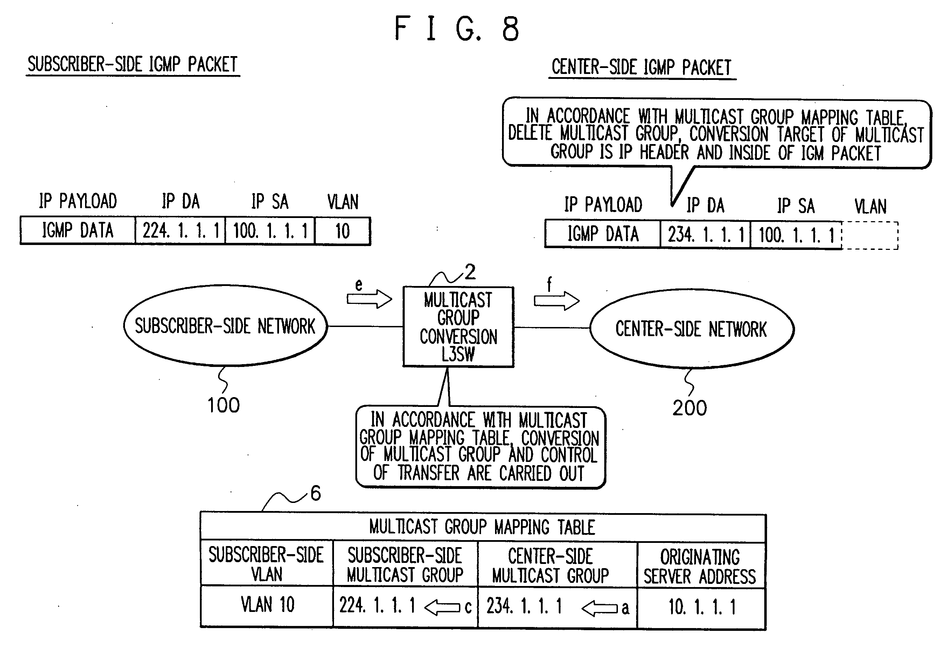

Fig. 8 is a view showing an operational example in an upward direction of IGMP packet transfer according to the first exemplary embodiment of the present invention. In Fig. 8, upon receipt of the IGMP packet from the subscriber-side network 100, the multicast group conversion L3SW2 checks whether or not a subscriber-side VLAN number and the subscriber-side multicast group described in the multicast grope mapping table 6 correspond to the IGMP packet.

If the subscriber-side VLAN number and the subscriber-side multicast group correspond to the IGMP packet, the multicast group conversion L3SW2 rewrites a multicast group address designated in a destination group and a payload (IP Payload) of the IGMP packet with the center-side multicast group related in the multicast grope mapping table 6, deletes the VLAN tag, and transmits it to the center-side network 200.

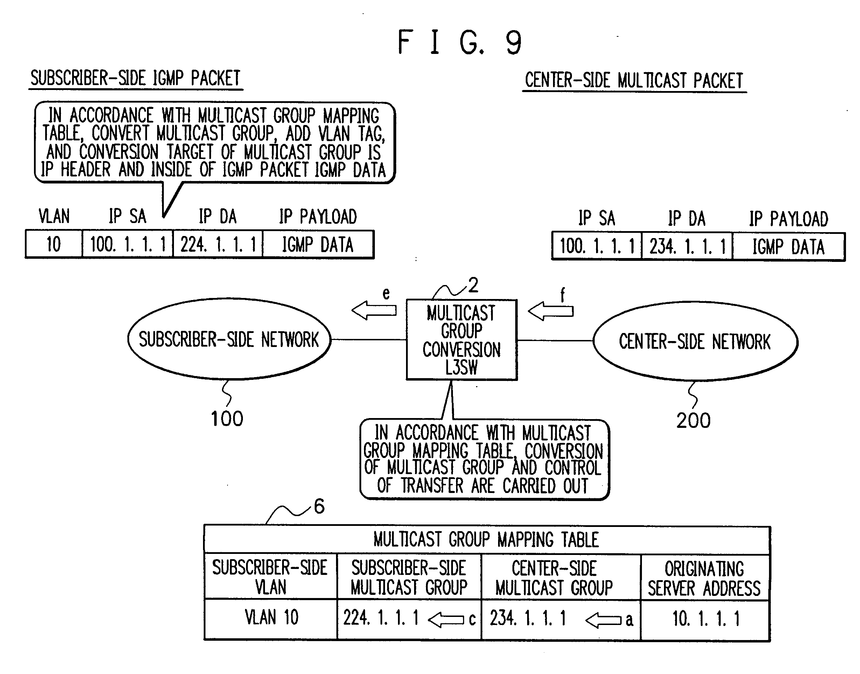

Fig. 9 is a view showing an operational example in a downward direction of IGMP packet transfer according to the first exemplary embodiment of the present invention. In Fig. 9, upon receipt of the IGMP packet from the center-side network 200, the multicast group conversion L3SW2 checks whether or not an IP SA (Source Address) and the center-side multicast group described in the multicast group mapping table 6 correspond to the IGMP packet.

If the IP SA (Source Address) and the center-side multicast group correspond to the IGMP packet, the multicast group conversion L3SW2 rewrites a multicast group address designated in the destination group and the payload of the IGMP packet with the subscriber-side multicast grope related in the multicast grope mapping table 6, gives the VLAN tag,-and transmits it to the subscriber-side network 100.

As described above, control of start of viewing corresponds to an IGMP Report packet, however, even other packet such as an IGMP Leave packet corresponding to stop of viewing and an IGMP Query packet corresponding to checking of viewing can be controlled as well as the above case. In addition, although the example of the IGMP is shown, even a MLD that is an IPv6 version of the IGMP can be controlled in the same way.

In this way, according to the present embodiment, since the multicast grope address is converted by the multicast group conversion L3SW2, it is possible to independently design the multicast group on the subscriber-side network 100 and the center-side network 200. In other words, although setting should be changed for all IP-STB 1a to 1d when setting of the network is changed in a normal case, according to the present embodiment, there is no necessity to do so and this makes it possible to reduce impact upon changing of setting.

In addition, according to the present embodiment, since the combination of the subscriber-side VLAN (the provider #1 subscriber VLAN 101 and the provider #2 subscriber VLAN 102) and the subscriber-side multicast group address is defined as a service unit, the IP-STBs 1a to 1d can be delivered with unified setting of the apparatus or the like upon shipment, so as to reduce a shipment operational cost.

### <Second Exemplary Embodiment>

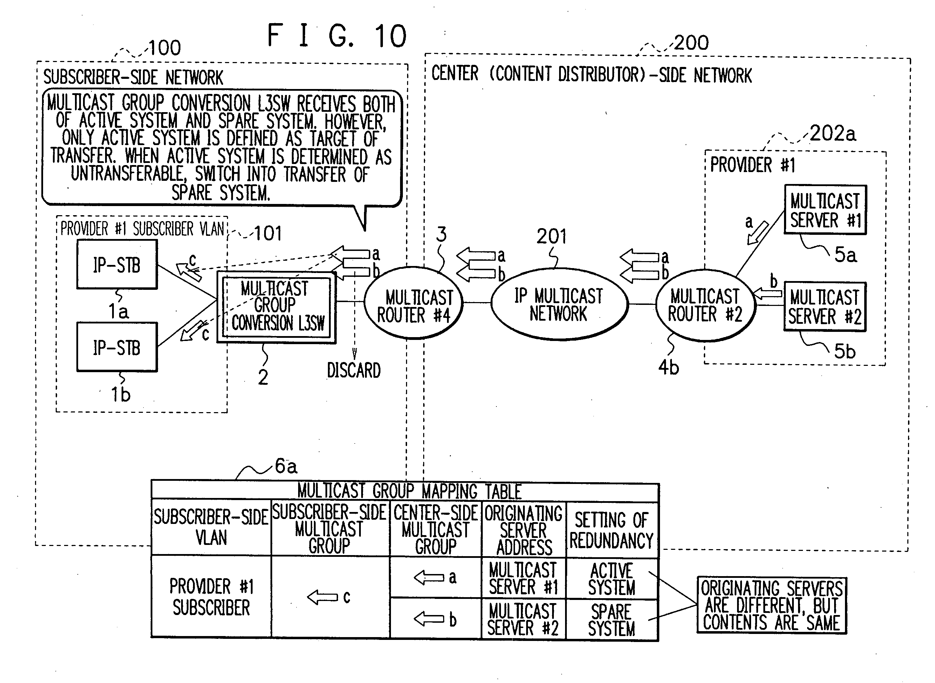

Fig. 10 is a block diagram showing a constitution of an IP multicast service system according to a second exemplary embodiment of the present invention. In Fig. 10, the basic structure of the IP multicast service system according to the second exemplary embodiment of the present invention is the same structure as that of the first exemplary embodiment according to the present invention shown in Fig. 3, however, the multicast group mapping table 6 is further devised.

In Fig. 10, there are two or more servers (the multicast servers (#1, #2) 5a, 5b) for transmitting a multicast packet in the provider (#1) 202a so as to realize redundancy. Therefore, according to the present embodiment, a multicast group mapping table 6a is configured by adding a redundancy item (setting of redundancy) to the multicast group mapping table 6 according to the first exemplary embodiment of the present invention.

Upon receipt of a viewing request from the IP-STB 1a, the multicast group conversion L3SW2 transmits a control signal to all redundant servers (the multicast servers (#1, #2) 5a, 5b). In this case, a multicast packet is received from all multicast servers (the multicast servers (#1, #2) 5a, 5b), however, only a packet from the server set for an active system in advance is transferred to the subscriber-side network 100.

In the case that the server set for the active system cannot provide a service for any cause, a packet from the server set for the spare system is transferred. In this way, according to the present embodiment, the source multicast server can be switched when the service is unavailable, so that it is possible to avoid unavailability of a service.

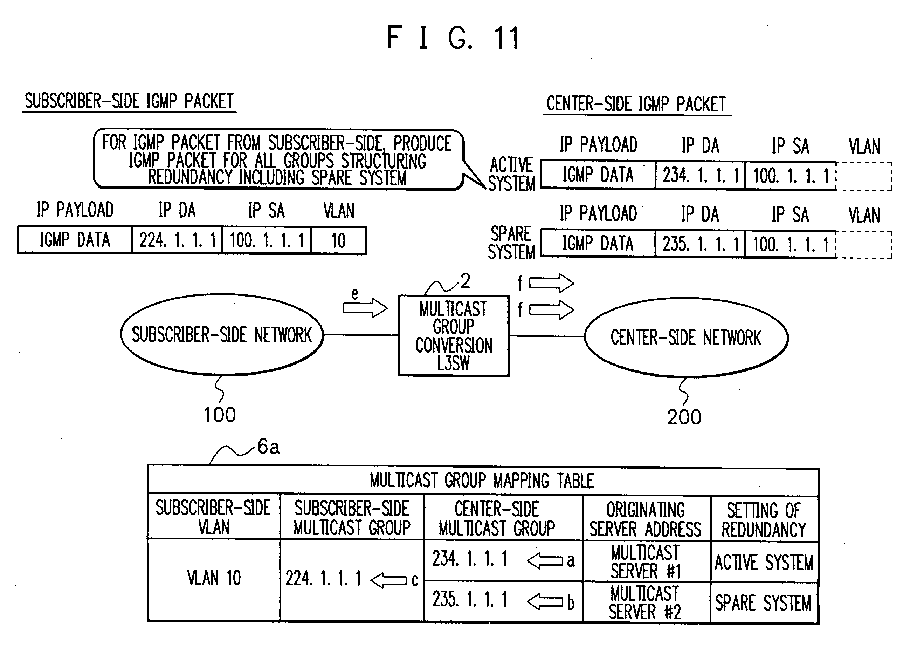

Fig. 11 is a view showing an operational example in an upward direction according to the second exemplary embodiment of the present invention. In Fig. 11, the multicast group conversion L3SW2 receives the IGMP packet from the subscriber-side network 100 and converts the multicast group as similar to the above-described first exemplary embodiment of the present invention. At this time, the multicast group conversion L3SW2 copies the IGMP packet by the number of settings of redundancy and performs conversion for each correspondence.

In other words, if the IGM packet from the subscriber-side network 100 is received for one packet, the packets by the number of the source servers are transmitted as the IGMP packet for the center-side network 200. The operation in the downward direction is the same as the above-described first exemplary embodiment of the present invention.

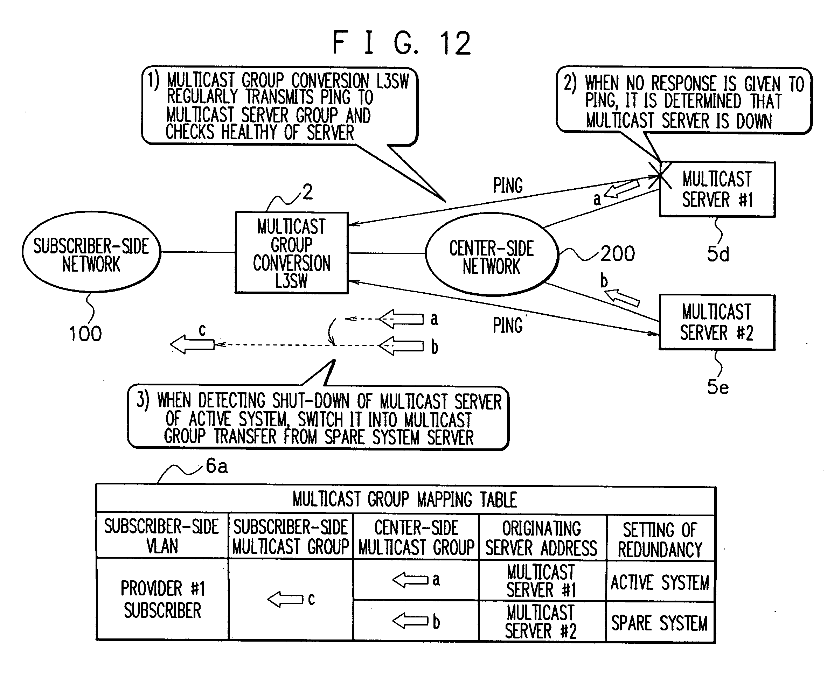

Fig. 12 is a view showing an example of a method for detecting unavailability of a service of a server according to the second exemplary embodiment of the present invention. In Fig. 12, the multicast group conversion L3SW2 regularly transmits Ping [ICMP (Internet Control Message Protocol) Echo] to the server described in the multicast group mapping table 6a so as to recognize switching between the active system and the spare system on the basis of the number of response failures and a time of failure.

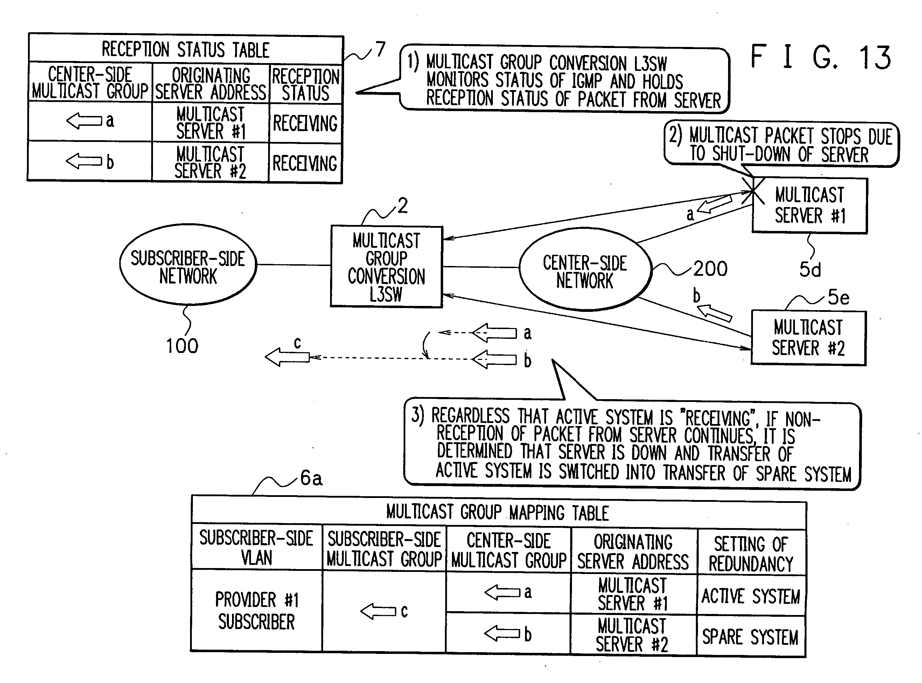

Fig. 13 is a view showing another example of the method for detecting unavailability of the service of the server according to the second exemplary embodiment of the present invention. In Fig. 13, the multicast group conversion L3SW2 holds a status of viewing from the subscriber-side in a reception status table 7. During viewing of the multicast group, the multicast group conversion L3SW2 monitors that the multicast packet is transmitted from the servers [the multicast server (#1, #2) 5d, 5e], identifies that the packet is not reached for a certain time, and recognizes switching between the active system and the spare system.

The methods for detecting unavailability of the service according to the second exemplary embodiment of the present invention have been described as above, however, these methods do not limit a mounting method thereof.

In this way, according to the present embodiment, other than the advantage according to the above-described first exemplary embodiment of the present invention, there is an advantage such that the control by the IGMP packet is not performed during a period from detection of unavailability of the service to switching of the service and a recovery time from the unavailability of the service is short because the multicast packet is transmitted to the all servers configuring the redundancy so as to control transferring of the multicast packet by the multicast group conversion L3SW2.

### <Third Exemplary Embodiment>

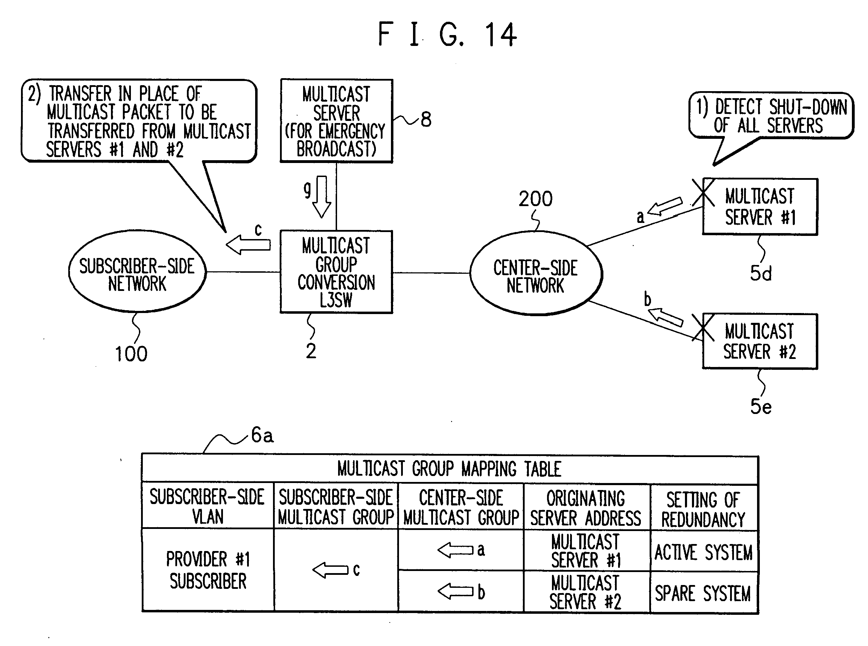

Fig. 14 is a block diagram showing a constitution of an IP multicast service system according to a third exemplary embodiment of the present invention. In Fig. 14, the basic structure of the IP multicast service system according to the third exemplary embodiment of the present invention is the same as that of the second exemplary embodiment of the present invention shown in Fig. 10, however, the operation when the all servers [the multicast server (#1, #2) 5d, 5e] cannot provide a service is further devised.

According to the present embodiment, a multicast server 8 for emergency broadcast is connected to the multicast group conversion L3SW2. When the multicast group conversion L3SW2 detects unavailability of the service of the all servers, the multicast packet is transmitted from the multicast server 8 in place of the multicast packet to be essentially transmitted to the subscriber-side network 100.

In this way, according to the present embodiment, other than the advantage in the above-described second exemplary embodiment of the present invention, it becomes possible to inform the subscriber that the service cannot be provided to the subscriber when the service is unavailable because the multicast server 8 for emergency broadcast is connected to the multicast group conversion L3SW2.

### <Fourth Exemplary Embodiment>

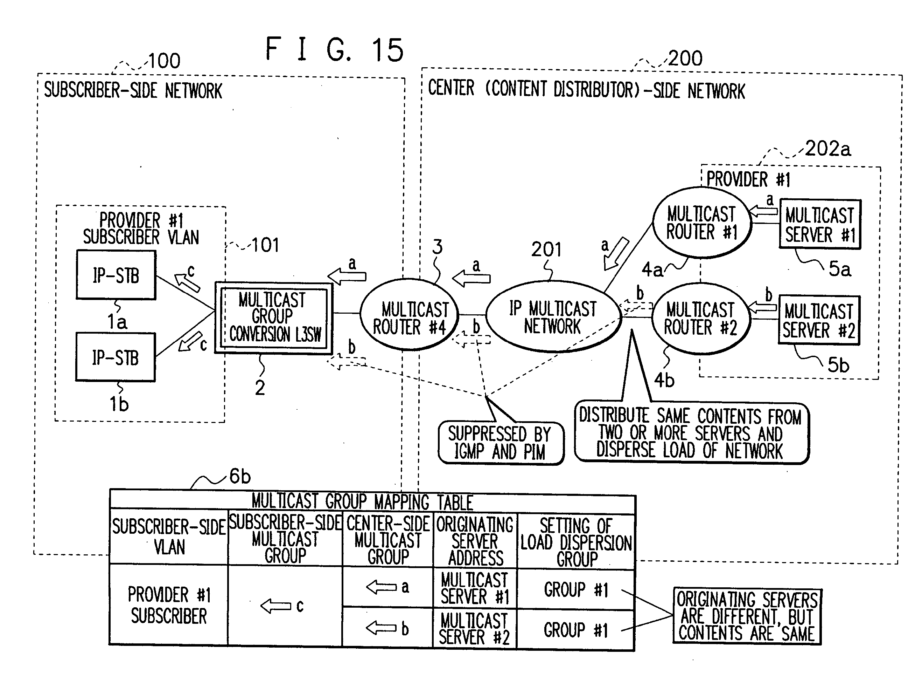

Fig. 15 is a block diagram showing a constitution of an IP multicast service system according to a fourth exemplary embodiment of the present invention. In Fig. 15, the basic structure of the IP multicast service system according to the fourth exemplary embodiment of the present invention is the same as that of the first exemplary embodiment of the present invention shown in Fig. 3, however, the multicast group mapping table 6 is further devised.

In Fig. 15, there are two or more servers [multicast servers (#1, #2) 5a, 5b] for transmitting the multicast packet in the provider (#1) 202a so as to perform load dispersion. According to the present embodiment, a multicast group mapping table 6b is configured by adding a load dispersion group item (load dispersion group setting) to the multicast group mapping table 6.

Upon receipt of a viewing request from the IP-STB 1a, the multicast group conversion L3SW2 selects any entry in a load dispersion group of the multicast group mapping table 6a, converts the packet corresponding to the viewing request, and transmit it to the center-side network 200. Thereby, the corresponding multicast packet is transferred only from the multicast router connected to any server, so that the load is dispersed for the route of the multicast.

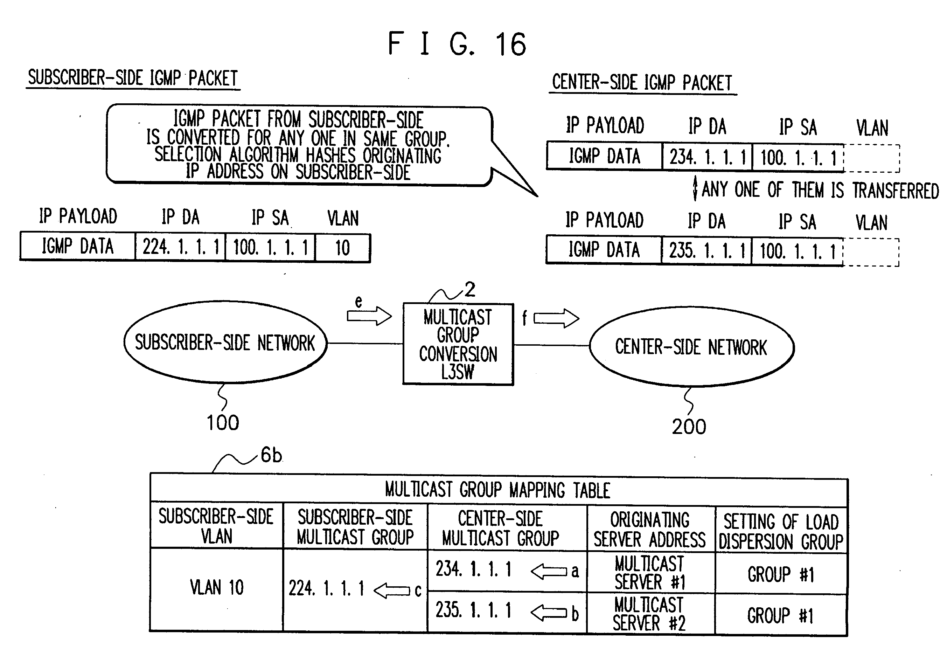

Fig. 16 is a view showing an operational example in an upward direction of the IP multicast service system according to the fourth exemplary embodiment of the present invention. In Fig. 16, the IP-STB 1a transmits the IGMP packet corresponding to the viewing request and the multicast group conversion L3SW2 receives the IGMP packet from the subscriber-side network 100 so as to convert it as similar to the above-described first exemplary embodiment of the present invention. At this time, the multicast group conversion L3SW2 selects any source server from among the source servers included in the load dispersion group, and converts into the center-side multicast group corresponding thereto.

As a method for selecting the source server, for example, it can be conceived that the source server is selected through any hash function with the IP address of the IP-STB 1a and the multicast group address that requests viewing, and the like, as a value. The operation in a downward direction according to the present embodiment is the same as that of the above-described first exemplary embodiment of the present invention.

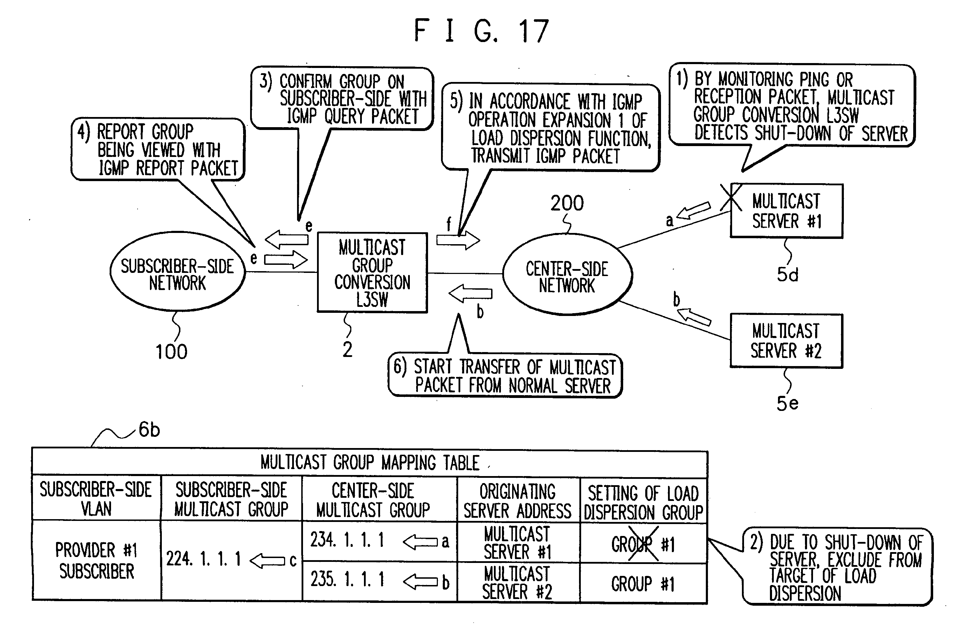

Fig. 17 is a view showing an operational example in the case of a failure of the IP multicast service system according to the fourth exemplary embodiment of the present invention. In Fig. 17, if there is a failure on the route of the originating source upon the load dispersion and the service is not available, it is necessary to exclude the server from the load dispersion group. Therefore, if the multicast group conversion L3SW2 detects the service unavailable status shown in the above-described second exemplary embodiment of the present invention, the multicast group conversion L3SW2 performs confirmation of viewing again by using an IGMP Query packet or the like corresponding to the confirmation of viewing in a state where the entry including the corresponding server is temporarily excluded from the multicast group mapping table 6b, and then selects the source server again.

In this way, other than the advantage in the above-described first exemplary embodiment of the present invention, the load dispersion of the network is possible because of the system according to the present embodiment in which the multicast group is transmitted to any multicast server configuring the load dispersion.

In addition, according to the present embodiment, as compared to the case that one server as a redundant structure is used completely as a backup, the server on the backup side can be used as load dispersion in the operation upon a failure, so that the multicast server is not wasted. Further, according to the present embodiment, since the IP-STB can select the source server again, so that when the number of the server is increased or when the number of the server is decreased, cutting of the service does not occur.

### <Fifth Exemplary Embodiment>

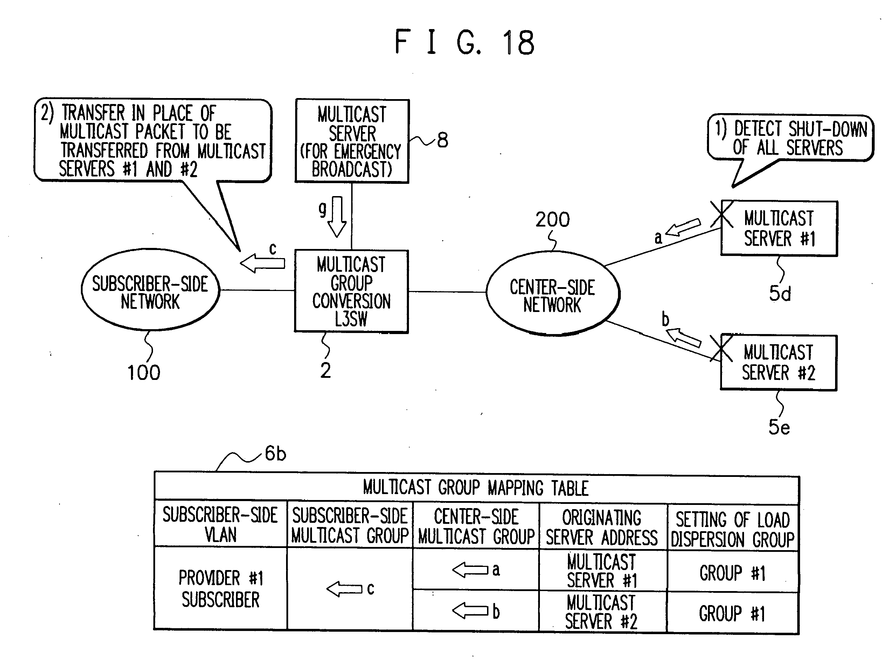

Fig. 18 is a block diagram showing a constitution of an IP multicast service system according to a fifth exemplary embodiment of the present invention. In Fig. 18, the basic structure of the IP multicast service system according to the fifth exemplary embodiment of the present invention is the same as that of the fourth exemplary embodiment of the present invention shown in Fig. 15, however, the operation when the all servers [the multicast server (#1, #2) 5d, 5e] cannot provide a service is further devised.

According to the present embodiment, the multicast server 8 for emergency broadcast is connected to the multicast group conversion L3SW2. When the multicast group conversion L3SW2 detects unavailability of the service of the all servers, the multicast packet is transmitted from the multicast server 8 in place of the multicast packet to be essentially transmitted to the subscriber-side.

In this way, according to the present embodiment, other than the advantage in the above-described fourth exemplary embodiment of the present invention, it becomes possible to inform the subscriber that the service cannot be provided to the subscriber when the service is unavailable while sufficiently using the multicast server and the network with the load dispersion.

According to the above description of the exemplary embodiments, the exemplary embodiments have the following characteristics.

An IP multicast service system according to a sixth exemplary embodiment may include: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

An IP multicast service system according to a seventh exemplary embodiment may be characterized in that the subscriber-side network is provided with a switching device including a mapping table which holds information of the group address system of the center-side network and information of the group address system of the subscriber-side network, and the switching device converts the group address of the multicast packet in accordance with the contents held in the mapping table.

An IP multicast service system according to an eighth exemplary embodiment may be characterized in that the mapping table holds a correspondence between a subscriber-side VLAN (Virtual Local Area Network) and its multicast group and a correspondence between a source server address and its multicast group.

An IP multicast service system according to a ninth exemplary embodiment may be characterized in that the switching device performs address conversion for the multicast group transmitted by the multicast server and the multicast group received by the subscriber-side VLAN.

An IP multicast service system according to a tenth exemplary embodiment may be characterized in that the mapping table holds, in addition the held contents, information of a redundant structure of the multicast servers when a plurality of multicast servers is present.

An IP multicast service system according to an eleventh exemplary embodiment may be characterized in that when a plurality of multicast servers is present, the mapping table holds, in addition the held content, information of a load dispersion group item in order to perform the load dispersion thereof.

An IP multicast service system according to an twelfth exemplary embodiment may be characterized in that when a failure occurs in all of the multicast servers, a server device for transmitting the multicast packet to the IP-STBs is connected to the switching device.

A switching device, according to a thirteenth exemplary embodiment, provided on a subscriber-side network in an IP multicast service system, may include: a center-side network configured by a plurality of multicast servers; and the subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

A switching device according to a fourteenth exemplary embodiment may be characterized in that a mapping table which holds information of the group address system of the center-side network and information of the group address system of the subscriber-side network is provided, and the group address of the multicast packet is converted in accordance with the contents held in the mapping table.

A switching device according to a fifteenth exemplary embodiment may be characterized in that the mapping table holds a correspondence between a subscriber-side VLAN (Virtual Local Area Network) and its multicast group and a correspondence between a source server address and its multicast group.

A switching device according to a sixteenth exemplary embodiment may be characterized in that address conversion is performed for the multicast group transmitted by the multicast server and the multicast group received by the subscriber-side VLAN.

A switching device according to a seventeenth exemplary embodiment may be characterized in that the mapping table holds, in addition the held contents, information of a redundant structure of the multicast servers when a plurality of multicast servers is present.

A switching device according to an eighteenth exemplary embodiment may be characterized in that when a plurality of multicast servers is present, the mapping table holds, in addition the held content, information of a load dispersion group item in order to perform the load dispersion thereof.

A group selection transmission method, according to a nineteenth exemplary embodiment, used for an IP multicast service system, may include: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image. A group design on the basis of an independent group address system on the center-side network and on the subscriber-side network can be made by converting a group address of the multicast packet transmitted and received between the center-side network and the subscriber-side network.

A group selection transmission method according to a twentieth exemplary embodiment may be characterized in that the subscriber-side network is provided with a switching device including a mapping table which holds information of the group address system of the center-side network and information of the group address system of the subscriber-side network, and the switching device converts the group address of the multicast packet in accordance with the contents held in the mapping table.

A group selection transmission method according to a twenty-first exemplary embodiment may be characterized in that the mapping table holds a correspondence between a subscriber-side VLAN (Virtual Local Area Network) and its multicast group and a correspondence between a source server address and its multicast group.

A group selection transmission method according to a twenty-second exemplary embodiment may be characterized in that the switching device performs address conversion for the multicast group transmitted by the multicast server and the multicast group received by the subscriber-side VLAN.

A group selection transmission method according to a twenty-third exemplary embodiment may be characterized in that the mapping table holds, in addition the held contents, information of a redundant structure of the multicast servers when a plurality of multicast servers is present.

A group selection transmission method according to a twenty-fourth exemplary embodiment may be characterized in that when a plurality of multicast servers is present, the mapping table holds, in addition the held content, information of a load dispersion group item in order to perform the load dispersion thereof.

A group selection transmission method according to a twenty-fifth exemplary embodiment may be characterized in that when a failure occurs in all of the multicast servers, a server device for transmitting the multicast packet to the IP-STBs is connected to the switching device.

The above-described embodiments are preferable embodiments of the present invention and a scope of the present invention is not limited only to these embodiments. It is possible for those skilled in the art to establish a variously-modified configuration by modifying and substituting the above-described embodiments without departing from the gist of the present invention.

## Claims

1. An IP multicast service system comprising:
a center-side network configured by a plurality of multicast servers; and
a subscriber-side network configured by a plurality of IP-STBs (Internet Protocol-Set Top Boxes) for receiving a multicast packet transmitted from the multicast servers and reproducing the multicast packet as an image, wherein
a group design on the basis of an independent group address system on the center-side network and on the subscriber-side network can be made by converting a group address of the multicast packet transmitted and received between the center-side network and the subscriber-side network.

2. The IP multicast service system according to Claim 1, wherein
the subscriber-side network is provided with a switching device including a mapping table which holds information of the group address system of the center-side network and information of the group address system of the subscriber-side network, and
the switching device converts the group address of the multicast packet in accordance with the contents held in the mapping table.

3. The IP multicast service system according to Claim 2, wherein
the mapping table holds a correspondence between a subscriber-side VLAN (Virtual Local Area Network) and its multicast group and a correspondence between a source server address and its multicast group.

4. The IP multicast service system according to Claim 3,
wherein
the switching device performs address conversion for the multicast group transmitted by the multicast server and the multicast group received by the subscriber-side VLAN.

5. The IP multicast service system according to Claim 3 or 4, wherein
the mapping table holds, in addition the held contents, information of a redundant structure of the multicast servers when a plurality of multicast servers is present.

6. The IP multicast service system according to Claim 3 or 4, wherein
when a plurality of multicast servers is present. the mapping table holds, in addition the held content, information of a load dispersion group item in order to perform the load dispersion thereof.

7. The IP multicast service system according to any one of Claims 1 to 6, wherein
when a failure occurs in all of the multicast servers, a server device for transmitting the multicast packet to the IP-STBs is connected to the switching device.

8. A switching device provided on a subscriber-side network in an IP multicast service system comprising: a center-side network configured by a plurality of multicast servers; and the subscriber-side network configured by a plurality of IP-STBs (Internet Protocol-Set Top Boxes) for receiving a multicast packet transmitted from the multicast servers and reproducing the multicast packet as an image, wherein
a group design on the basis of an independent group address system on the center-side network and on the subscriber-side network can be made by converting a group address of the multicast packet transmitted and received between the center-side network and the subscriber-side network.

9. The switching device according to Claim 8, wherein
a mapping table which holds information of the group address system of the center-side network and information of the group address system of the subscriber-side network is provided, and
the group address of the multicast packet is converted in accordance with the contents held in the mapping table.

10. The switching device according to Claim 9, wherein
the mapping table holds a correspondence between a subscriber-side VLAN (Virtual Local Area Network) and its multicast group and a correspondence between a source server address and its multicast group.

11. The switching device according to Claim 10, wherein
address conversion is performed for the multicast group transmitted by the multicast server and the multicast group received by the subscriber-side VLAN.

12. The switching device according to Claim 9 or 10 wherein
the mapping table holds, in addition the held contents, information of a redundant structure of the multicast servers when a plurality of multicast servers is present.

13. The switching device according to Claim 10 or 11 wherein
when a plurality of multicast servers is present, the mapping table holds, in addition the held content, information of a load dispersion group item in order to perform the load dispersion thereof.

14. A group selection transmission method used for an IP multicast service system comprising: a center-side network configured by a plurality of multicast servers; and a subscriber-side network configured by a plurality of IP-STBs (Internet Protocol-Set Top Boxes) for receiving a multicast packet transmitted from the multicast servers and reproducing the multicast packet as an image, wherein
a group design on the basis of an independent group address system on the center-side network and on the subscriber-side network can be made by converting a group address of the multicast packet transmitted and received between the center-side network and the subscriber-side network.

15. The group selection transmission method according to Claim 14, wherein
the subscriber-side network is provided with a switching device including a mapping table which holds information of the group address system of the center-side network and information of the group address system of the subscriber-side network, and
the switching device converts the group address of the multicast packet in accordance with the contents held in the mapping table.

16. The group selection transmission method according to Claim 15, wherein
the mapping table holds a correspondence between a subscriber-side VLAN (Virtual Local Area Network) and its multicast group and a correspondence between a source server address and its multicast group.

17. The group selection transmission method according to Claim 16, wherein
the switching device performs address conversion for the multicast group transmitted by the multicast server and the multicast group received by the subscriber-side VLAN.

18. The group selection transmission method according to Claim 16 or 17, wherein
the mapping table holds, in addition the held contents, information of a redundant structure of the multicast servers when a plurality of multicast servers is present.

19. The group selection transmission method according to Claim 16 or 17 wherein
when a plurality of multicast servers is present, the mapping table holds, in addition the held content, information of a load dispersion group item in order to perform the load dispersion thereof.

20. The group selection transmission method according to any one of Claims 14 to 19, wherein
when a failure occurs in all of the multicast servers, a server device for transmitting the multicast packet to the IP-STBs is connected to the switching device.
